# EUROPÄISCHE PATENTSCHRIFT

(11) **EP 3 891 476 B1**
(45) Veröffentlichungstag und Bekanntmachung des Hinweises auf die Patenterteilung: **26.10.2022**
(21) Anmeldenummer: 19813242.5
(22) Anmeldetag: 11.11.2019
(51) Int. Cl.: G01F 1/58, G01K 13/02, G01L 19/00, G01L 9/00, G01P 5/08, G01F 15/02

(54) **MAGNETISCH-INDUKTIVES DURCHFLUSSMESSGERÄT**
MAGNETIC-INDUCTIVE FLOWMETER
DÉBITMÈTRE MAGNETIQUE-INDUCTIF

(30) Priorität: 04.12.2018 DE 102018130793
(43) Veröffentlichungstag der Anmeldung: 13.10.2021
(73) Patentinhaber: Endress + Hauser Flowtec AG, 4153 Reinach (CH)
(72) Erfinder: RUFER, Heinz, 4143 Dornach (CH); VOIGT, Frank, 79576 Weil am Rhein (DE); ZIEGLER, Steffen, 79650 Schopfheim (DE)
(74) Vertreter: Penner, Paul
(86) Internationale Anmeldenummer: PCT/EP2019/080800
(87) Internationale Veröffentlichungsnummer: WO 2020/114717

(56) Entgegenhaltungen:
- EP-A1- 1 522 827
- WO-A1-2018/198263
- CN-Y- 201 107 058
- DE-A1-102007 024 006
- DE-A1-102010 029 119
- JP-A- S5 692 414
- US-A1- 2005 044 965
- US-A1- 2010 077 865
- US-A1- 2015 377 666

## Beschreibung

Magnetisch-induktive Durchflussmessgeräte werden zur Bestimmung der Durchflussgeschwindigkeit und/oder des Volumendurchflusses eines Mediums in einem Messrohr eingesetzt. Ein magnetisch-induktives Durchflussmessgerät umfasst eine magnetfelderzeugende Vorrichtung, die ein Magnetfeld senkrecht zur Querachse des Messrohres erzeugt. Dafür werden üblicherweise einzelne oder mehrere Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse verlaufen. Ein an die Mantelfläche des Messrohres angebrachtes Messelektrodenpaar greift eine induktiv erzeugte elektrische Messspannung ab, die entsteht, wenn ein leitfähiges Medium bei angelegtem Magnetfeld in Richtung der Längsachse fließt. Da die abgegriffene Messspannung laut Faraday'schem Induktionsgesetz von der Geschwindigkeit des fließenden Mediums abhängt, kann aus der Messspannung die Durchflussgeschwindigkeit und, mit Hinzunahme einer bekannten Rohrquerschnittsfläche, der Volumendurchfluss des Mediums ermittelt werden.

Für spezielle Anwendungen sind zusätzlich zum Volumendurchfluss, Informationen bezüglich des Mediumdruckes für die Überwachung von Unregelmäßigkeiten und Leakagestellen erwünscht.

Aus dem Stand der Technik sind bereits magnetisch-induktive Durchflussmessgeräte bekannt, die dazu ausgebildet sind zusätzlich zur Bestimmung der Durchflussgeschwindigkeit auch die Mediumstemperatur und/oder den Mediumsdruck mittels zusätzlicher Sensorik zu ermitteln. Beispiele dafür werden in den Patentschriften US20150377666A1, DE102007024006A1, EP1522827A1, DE102010029119A1, US2010077865A1 oder CN201107058Y gelehrt.

Aus der EP0770855A1 ist bereits ein magnetisch-induktives Durchflussmessgerät bekannt, das neben den Messelektroden zur Ermittlung einer Durchflussgeschwindigkeit zwei Druckmesswandler aufweist, die in der Wandung des Messrohres entlang einer Mantellinie angeordnet sind.

Die US5670724 lehrt ein Durchflussmessgerät mit einem Messelektrodenpaar und einem unmittelbar zwischen den beiden Messelektroden angeordneten Druckmesswandler.

Aus der DE102012109308A1 ist ein Füllstandsüberwachungssystem mit einer Elektrode zur Überwachung des Füllstandes eines fließenden Mediums in einem Rohr bekannt, die einen integrierten Temperatursensor aufweist.

Diesen Ausgestaltungen nachteilig ist aber, dass für die Installation eines Druckmesswandlers und/oder eines Temperatursensors eine Öffnung in das Messrohr eingearbeitet werden muss. Jede zusätzliche Öffnung ist jedoch eine potentielle Leckagestelle und sollte somit möglichst vermieden werden.

Die JPS5692414A offenbart ein magnetisch-induktives Durchflussmessgerät mit einer Elektrodenbaugruppe, welche einen Elektrodenkörper mit einer durchgehenden Bohrung, die einen integrierten Wirkdruckkanal zum Führen des Mediums bildet, und einen Druckmesswandler aufweist. Dabei ist der Druckmesswandler an einem Ende des Elektrodenkörpers derart angeordnet, dass dieser mit dem auf die Stirnfläche des Elektrodenkörpers wirkenden Druck beaufschlagbar ist.

Der Erfindung liegt die Aufgabe zugrunde ein alternatives magnetisch-induktives Durchflussmessgerät bereitzustellen, das die Temperatur und den Druck des führenden Mediums messen kann.

Die Aufgabe wird erfindungsgemäß durch das magnetisch-induktive Durchflussmessgerät gemäß Anspruch 1 gelöst.

Ein erfindungsgemäßes magnetisch-induktives Durchflussmessgerät zur Ermittlung der Durchflussgeschwindigkeit und/oder des Volumendurchflusses eines Mediums umfasst ein Messrohr zum Führen des Mediums, eine magnetfelderzeugende Vorrichtung und mindestens eine Elektrodenbaugruppe, die einen galvanischen Kontakt mit dem Medium formend in das Messrohr eingebaut ist, wobei die Elektrodenbaugruppe einen Elektrodenkörper aufweist, wobei der Elektrodenkörper stiftförmig ausgebildet ist und eine Stirnfläche aufweist, wobei ein Druckmesswandler mit dem Elektrodenkörper gekoppelt ist, wobei der Druckmesswandler mit dem auf die Stirnfläche wirkenden Druck beaufschlagbar ist, wobei der Elektrodenkörper eine erste Bohrung aufweist, wobei die erste Bohrung durchgehend ist und einen integrierten Wirkdruckkanal zum Führen des Mediums bildet,
und ist dadurch gekennzeichnet, dass die Elektrodenbaugruppe einen Temperatursensor umfasst, der dazu eingerichtet ist ein von der Mediumstemperatur abhängiges Messsignal zu ermitteln, und dass der Temperatursensor am Elektrodenkörper anliegend angebracht ist.

Bislang sind für die Bestimmung des Mediumdruckes zusätzlich in das Messrohr eingebrachte Druckmesswandler notwendig. Dabei werden üblicherweise zu den für die Messelektroden benötigten Öffnungen weitere Öffnungen in das Messrohr eingearbeitet. Die vorliegende Lösung benötigt keine zusätzlichen Öffnungen im Messrohr, da der auf die Stirnfläche des Elektrodenkörpers wirkende Druck des Mediums direkt über einen mit dem Elektrodenkörper gekoppelten Druckmesswandler aufgenommen wird. Dabei ist es besonders vorteilhaft, wenn der Druckmesswandler in Kontakt mit dem Medium steht, es sind aber auch Druckmesswandler bekannt, die dem Medium und somit auch dem Mediumdruck nur indirekt ausgesetzt sind. Dies liegt beispielsweise dann vor, wenn sich Lufteinschlüsse zwischen Druckmesswandler und Medium befinden.

Als Elektrodenbaugruppe ist eine eine Elektrode bildende Baugruppe aus mindestens zwei Bauteilen zu verstehen, wobei mindestens ein erstes Bauteil die Funktion hat und dazu ausgebildet ist, eine Messspannung im fließenden Medium abzugreifen und mindestens ein zweites Bauteil die Funktion hat und dazu ausgebildet ist, den Druck im Medium zu messen. Die Elektrodenbaugruppe kann auch Bauteile umfassen, die die Funktion haben und dazu eingerichtet sind weitere Prozessparameter, wie zum Beispiel die Temperatur, die Viskosität und den pH-Wert des Mediums zu bestimmen.

Es ist besonders vorteilhaft, wenn das erste Bauteil den Elektrodenkörper umfasst. In diesem Kontext ist der Elektrodenkörper als eine aus herkömmlichen magnetisch-induktiven Durchflussmessgeräten bekannte Elektrode zu verstehen. Diese sind üblicherweise stiftförmig ausgebildet und lassen sich somit einfach in das Messrohr einbauen und fixieren. Sie weisen einen Elektrodenkopf mit einer Stirnfläche auf, auf die der Mediumdruck wirkt.

Das zweite Bauteil ist als Druckmesswandler ausgebildet. Erfindungsgemäß ist der Druckmesswandler an den Elektrodenkörper gekoppelt. Darunter ist zum Einen zu verstehen, dass der Druckmesswandler mit dem Elektrodenkörper entweder direkt oder indirekt über ein weiteres Bauteil mechanisch verbunden ist. Zum Anderen kann es dahingehend gedeutet werden, dass der Druckmesswandler mit dem Elektrodenkörper in einem elektrischen Kontakt steht. Eine Kopplung zwischen dem Druckmesswandler und dem Elektrodenkörper ist schon dann gegeben, wenn beide Bauteile so ausgebildet sind, dass der auf die Stirnseite des Elektrodenkopfes wirkende Mediumdruck auf den Druckmesswandler aufschlagbar ist.

Der Druckmesswandler kann beliebig ausgestaltet sein. Der Druckmesswandler kann zum Beispiel als Dehnungsmessstreifen, piezoresistiver Drucksensor, piezoelektrischer Drucksensor, kapazitiver Drucksensor, induktiver Drucksensor, optischer Drucksensor, thermischer Drucksensor oder Hall-Drucksensor ausgebildet sein.

Die Elektrodenbaugruppe übernimmt die Funktion einer Füllstandüberwachungselektrode, Bezugselektrode und/oder Messelektrode.

Da die Elektrodenbaugruppe zusätzlich zum Drucksensor den Temperatursensor umfasst, kann auf eine weitere Öffnung im Messrohr verzichtet werden. Es ergeben sich zwei Möglichkeiten die Mediumstemperatur zu ermitteln. Entweder ist der am Elektrodenkörper angebrachte Temperatursensor im direkten Kontakt mit dem Medium oder er greift das Messsignal zur Ermittlung der Mediumstemperatur indirekt über eine im direkten Kontakt mit dem Medium stehende Elektrodenbaugruppe ab. Dieses Bauteil kann der Elektrodenkopf, der Elektrodenkörper, der Hohlraumkörper oder der Druckmesswandler sein. Zum Beispiel kann eine Mediumstemperatur über einen hinter dem Druckmesswandler angeordneten Temperatursensor abgegriffen werden. Wenn das Medium mit dem Druckmesswandler in Kontakt kommt erfolgt eine Wärmemengenaustausch. Das kann mit der Mess- und/oder Auswerteeinheit detektiert werden. Mithilfe einer zuvor erfolgten Kalibrierung kann daraus eine Mediumstemperatur ermittelt werden.

Die erste Bohrung dient dabei zum Führen des Mediums und kann entweder als Sacklochbohrung oder als Durchgangsbohrung ausgebildet sein. Im Falle einer Sacklochbohrung kann der Druckmesswandler am Ende der erste Bohrung oder aber auch an der Innenwand der erste Bohrung angebracht sein. Ein Elektrodenkörper mit Durchgangsbohrung weist eine eingangsseitige und ausgangsseitige Stirnfläche auf. Im Falle einer Durchgangsbohrung kann der Druckwandler an der Innenwand der erste Bohrung angebracht sein, es ist jedoch besonders vorteilhaft, insbesondere im Falle eines eine Messmembrane umfassenden Druckmesswandlers, wenn ebendieser an der auslaufseitigen Stirnfläche des Elektrodenkörpers angebracht ist.

Die erste Bohrung ist durchgehend als Wirkdruckkanal ausgebildet, da sich dadurch eine Vielzahl an weiteren Ausgestaltungen bezüglich der Koppelung des Druckmesswandlers an den Elektrodenkörper eröffnen. Eine vorteilhafte Ausgestaltung weist einen an der auslaufseitigen Stirnfläche des Elektrodenkörpers angebrachten Adapter auf, über den weitere Messwandler zum Erfassen von Prozessparametern mit dem Elektrodenkörper gekoppelt sind.

Dadurch, dass der Temperatursensor am Elektrodenkörper anliegend angebracht ist befindet er sich besonders nah an dem durch das Messrohr strömenden Medium, wodurch eine deutlich genauere Detektion von Temperaturänderungen im Medium möglich sind. Dies ist besonders vorteilhaft in Bezug auf die Anbringung hinter dem Druckmesswandler oder am Hohlraumkörper.

Gemäß einer Ausgestaltung umfasst der Druckmesswandler eine Messmembrane.

Es ist besonders vorteilhaft, wenn der Druckmesswandler eine Messmembrane umfasst, da derartige Druckmesswandler mit der notwendigen Größenordnung herstellbar ist und eine Kopplung zwischen Druckmesswandler und Elektrodenkörper ohne zusätzliche Adaptoren realisierbar ist. Weiterhin decken Druckmesswandler mit Messmembranen den für die Trinkwasseranwendungen interessanten Druckbereich ab.

Die Innenseite der erste Bohrung kann eine Beschichtung aufweisen, die das Eindringen des Mediums in die erste Bohrung und die Benetzung der Innenseite der erste Bohrung optimiert. Der Wirkdruckkanal bzw. die erste Bohrung muss nicht zwingend selbstentleerend sein, da Druckmesswandler bekanntermaßen den Druck eines Mediums auch indirekt abgreifen können.

Gemäß einer weiteren Ausgestaltung ist der Elektrodenkörper endseitig mit einem Hohlraumkörper verbunden.

Der Hohlraumkörper ist dazu eingerichtet den Druckwirkkanal aufzuweiten, so dass Messmembranen, deren Durchmesser größer ist als der Durchmesser der erste Bohrung, verwendet werden können. Dadurch kann die Fläche auf die der Mediumdruck erhöht und die Messgenauigkeit der Druckmessung gesteigert werden.

Der Hohlraumkörper kann gleichzeitig als Adapter für weitere Messwandler ausgestaltet sein. Wobei der Messwandler ein Thermometer, einen PH-Sensor oder einen Sensoren zu Ermittlung der Viskosität, der Zusammensetzung des Mediums und/oder weiterer Prozessparameter des Mediums umfasst.

Gemäß einer weiteren Ausgestaltung ist ein den Druckmesswandler umfassendes Gehäuse stoffschlüssig mit dem Hohlraumkörper verbunden.

Es ist besonders vorteilhaft, wenn das Gehäuse stoffschlüssig mit dem Hohlraumkörper, insbesondere über eine Schraub-, Schweiß-, Löt- oder Klebeverbindung verbunden ist. Dadurch kann eine ausreichende elektrische Kontaktierung zwischen Gehäuse und Hohlraumkörper realisiert werden. Bedingt durch das Herstellverfahren des erfindungsgemäßen magnetisch-induktiven Durchflussmessgerätes ist zwischen der endseitigen Stirnfläche des Elektrodenkörpers und dem Hohlraumkörper eine formschlüssige Verbindung zum Abdichten eingebracht. Diese verhindert ein Austreten des Mediums. Es ist vorteilhaft, wenn die Verbindung als formschlüssige Verbindung ausgebildet ist, da dadurch ein Austausch der einzelnen Bauteile gewährleistbar ist. Die formschlüssige Verbindung ist dabei als Dichtring und insbesondere als Kegeldichtung ausgebildet. Die Dichtung kann auch elektrisch isolierend sein, da die elektrische Kontaktierung mit dem Elektrodenkörper über weitere Kontaktstellen, beispielsweise dem Gewinde, realisierbar ist.

Die Verbindung zwischen der endseitigen Stirnfläche des Elektrodenkörpers und dem Hohlraumkörper kann aber auch stoffschlüssig ausgebildet sein. In diesem Fall wird die Verbindung nach dem Einführen des Elektrodenkörpers in die in das Messrohr eingebrachte Öffnung und Fixieren des Elektrodenkörpers an das Messrohr realisiert.

Gemäß einer weiteren Ausgestaltung ist eine elektrische Kontaktierung des Elektrodenkörpers über den Hohlraumkörper und/oder das Gehäuse realisiert.

Die oben genannte Ausgestaltung ist vorteilhaft, da auf eine zusätzliche Verkabelung bzw. eine zusätzliche Kontaktiervorrichtung an dem Elektrodenkörper verzichtet werden kann.

Gemäß einer weiteren Ausgestaltung weist das Gehäuse mindestens eine Kontaktiervorrichtung auf, über die die Elektrodenbaugruppe mit einer Mess- und/oder Auswerteeinheit in einem elektrischen Kontakt steht.

Durch die Kontaktiervorrichtung im Gehäuse des Druckmesswandlers reicht eine einzelne Steckverbindung zum Abgreifen des Drucksignals und der Messspannung aus.

Gemäß einer weiteren Ausgestaltung umfasst die magnetfelderzeugende Vorrichtung mindestens eine Spule und mindestens einen im Inneren der Spule positionierten Spulenkern, wobei der Spulenkern als Hohlzylinder ausgebildet und die Elektrodenbaugruppe im Inneren des Spulenkerns positioniert ist.

Es sind magnetfelderzeugende Vorrichtungen bekannt, die neben einer Spule mit einem im Inneren befindlichen Spulenkern zusätzlich ein Leitblech im Außenbereich und mindestens ein Abschirmelement zwischen einem Polschuh und dem Leitblech und/oder oberhalb des Leitblechs und der Spule umfassen. Das Leitblech und die Abschirmelemente erfüllen die Aufgabe Stör- oder Streufelder zu reduzieren. Dagegen ist der Polschuh für das Einkoppeln des Magnetfeldes in das Medium verantwortlich. Nach der oben genannten vorteilhaften Ausgestaltung hat die Elektrodenbaugruppe die Funktion einer Füllstandsüberwachungselektrode und ist mit der magnetfelderzeugenden Vorrichtung verbaut. Dabei kann die Messung des Druckes durchgehend erfolgen oder phasenweise, nämlich immer dann, wenn das Magnetfeld ausgeschaltet ist.

Gemäß einer weiteren Ausgestaltung weist der Spulenkern eine Innenseite auf, wobei zwischen der Innenseite und dem Gehäuse eine Isolierung eingebracht ist.

Da die elektrische Kontaktierung des Elektrodenkörpers über das Gehäuse des Druckmesswandlers realisiert ist, ist eine Isolierung zwischen den Elektrodenbaugruppe und dem Spulenkern notwendig. Die Isolierung kann als Beschichtung oder als hohlzylindrische Isolierhülse ausgebildet sein.

Gemäß einer weiteren Ausgestaltung weist der Elektrodenkörper einen Elektrodenkopf auf, wobei der Elektrodenkopf eine Kontur aufweist.

Die Kontur ist dabei schlitzförmig als Nut oder kreuzförmig ausgebildet. Sie kann aber jede beliebige Struktur annehmen, die zu einer Vereinfachung der Montage des Elektrodenkörpers in das Messrohr führt. Die Kontur ist dermaßen ausgebildet, dass bei der Herstellung des erfindungsgemäßen magnetisch-induktiven Durchflussmessgerätes der Monteur den Elektrodenkörper an der Kontur fixieren kann, um dann im nächsten Schritt die Isolierhülle aufzustecken und den Elektrodenkörper mit einer Mutter an das Messrohr zu befestigen.

Gemäß einer weiteren Ausgestaltung umfasst der Elektrodenkörper eine Füllstandsüberwachungselektrode und/oder eine Bezugselektrode und/oder eine Messelektrode zum Abgreifen einer Messspannung im Medium.

Gemäß einer weiteren Ausgestaltung ist der Elektrodenkörper als Stiftelektrode, Spitzelektrode oder Pilzelektrode ausgebildet ist.

Gemäß einer weiteren Ausgestaltung ist der Elektrodenkörper in einen ersten und zweiten Bereich eingeteilt, wobei der Elektrodenkörper im erste Bereich eine geringere Wandstärke aufweist als im zweiten Bereich, wobei der Temperatursensor im ersten Bereich an einer Außenwandung des Elektrodenkörpers angebracht ist. Der Temperatursensor kann geklebt oder mechanisch an die Außenwandung des Elektrodenkörpers fixiert werden.

Gemäß einer weiteren Ausgestaltung umfasst der Temperatursensor einen Halbleiter-Temperatursensor, ein Thermoelement, einen Temperaturfühler mit Schwingquarz, einen pyroelektrischen Temperatursensor, ein Pyrometer oder einen Faseroptischen Temperatursensor.

Gemäß einer weiteren Ausgestaltung weist der Elektrodenkopf eine dem Messrohrinneren abgewandten Rückseite auf, in der eine zweite Vertiefung eingebracht ist, wobei der Temperatursensor in die zweite Vertiefung eingelassen ist.

Da sich typischerweise im Druckwirkkanal des Elektrodenkörpers nur eine geringe Menge an Medium befindet, ist es vorteilhaft, wenn der Temperatursensor zusätzlich mit einem weiteren Bauteil im Kontakt steht. Als besonders vorteilhaft hat sich dabei der Elektrodenkopf herausgestellt, da dieser idealerweise durchgehend im Kontakt mit fließendem Medium steht. Das ist beim Elektrodenkörper nicht zwingend der Fall, da dieser auch mit teilgefüllter ersten Bohrung die Funktion des Wirkdruckkanals für die Beaufschlagung des Druckmesswandlers erfüllt. Luftblasen oder Lufteinschlüsse sind jedoch keine guten Wärmeleiter, somit kann es zu starken Abweichungen von der tatsächlichen Mediumstemperatur kommen. Bei der Anordnung des Temperatursensors am Elektrodenkopf wird dieses Problem umgangen. Eine Einkerbung bzw. eine Vertiefung im Elektrodenkopf sorgt dafür, dass der Abstand des Temperatursensors zum Medium weiter sinkt und dass der Temperatursensor am Elektrodenkopf fixiert werden kann. Dies geschieht ohne Verluste der Dichtheit des Aufbaus und mit Erhalt von strömungsprofilspezifischen Eigenschaften des Elektrodenkopfes.

Gemäß einer weiteren Ausgestaltung weist der Elektrodenkopf eine Öffnung, insbesondere eine zweite Bohrung zum Führen einer Hülse auf, in der der Temperatursensor eingebracht ist.

Hat das Elektrodenbauteil die Funktion einer Füllstandsüberwachungselektrode, so spielt das sich aus der Form des Elektrodenkopfes ergebende Strömungsprofil eine eher untergeordnete Rolle. Somit ergibt sich eine erfindungsgemäße Ausgestaltung, in der der Temperatursensor im direkten Kontakt mit dem Medium steht. Dafür weist der Elektrodenkopf eine Öffnung bzw. eine zweite Bohrung auf, durch die eine einen Temperatursensor umfassende Hülse, insbesondere eine Tauchhülse eingebracht ist. Ein Verfahren zur Herstellung eines erfindungsgemäßen magnetisch-induktiven Durchflussmessgerätes umfasst die folgende Verfahrensschritte:
- A: Bereitstellen eines Messrohres, umfassend ein Rohr mit Liner;
- B: Einbringen einer Öffnung in das Rohr und in den Liner;
- C: Einführen des einen Thermosensor umfassenden Elektrodenkörpers in die Öffnung;
- F: Fixieren des Elektrodenkörpers mittels einer Mutter;
- G: Stoffschlüssiges Verbinden eines einen Druckmesswandler umfassenden Gehäuses mit einem ein Innengewinde umfassenden Hohlraumkörpers;
- H: Aufschrauben des Hohlraumkörpers auf das Gewinde des Elektrodenkörper;
- J: Umschließen der Elektrodenbaugruppe mit einer als Hohlzylinder ausgebildeten Isolierung und einem als Hohlzylinder ausgebildeten Spulenkerns;
- K: Aufstecken einer Spule auf den Spulenkern, die Isolierung und das Elektrodenbaugruppe;
- L: Verbinden der Elektrodenbaugruppe mit einer Mess- und/oder Auswerteeinheit über eine Kontaktiervorrichtung;
- N: Verbinden des Thermosensors mit der Mess- und/oder Auswerteeinheit über das Anschlusskabel.

Das Verfahren kann weitere Verfahrensschritte umfassen:
- D: Abdichten der Öffnung und/oder Fixieren des Elektrodenkörpers mittels einer Isolierhülse, wobei die Isolierhülse eine Einkerbung für die Führung eines Anschlusskabels umfasst;
- E: Fixieren des Elektrodenkörpers an der Kontur;
- I: Aufstecken eines eine Öffnung umfassenden Polschuhs; und
- M: Aufstecken eines Leitblechs.

Das Verfahren ist jedoch nicht darauf beschränkt, die einzelnen Verfahrensschritte in der angegebenen Reihenfolge auszuführen.

Die Erfindung wird anhand der nachfolgenden Figuren näher erläutert. Es zeigt:
Fig. 1: eine Darstellung eines Rohrquerschnitts eines magnetisch-induktiven Durchflussmessgerätes nach dem Stand der Technik;
Fig. 2: eine Explosionsdarstellung einer erfindungsgemäßen Elektrodenbaugruppe;
Fig. 3: eine Darstellung eines Längsschnittes eines erfindungsgemäßen magnetisch-induktiven Durchflussmessgerätes;
Fig. 4: einen Querschnitt einer erfindungsgemäßen Ausgestaltung in der ein Temperatusensor am Elektrodenkörper anliegend angebracht ist;
Fig. 5: einen Querschnitt einer weiteren erfindungsgemäßen Ausgestaltung in der der Temperatursensor in einer Vertiefung im Elektrodenkopf sitzt; und
Fig. 6: einen Querschnitt einer weiteren erfindungsgemäßen Ausgestaltung in der der Elektrodenkopf eine zweite Bohrung aufweist, durch die der Temperatursensor geführt ist.

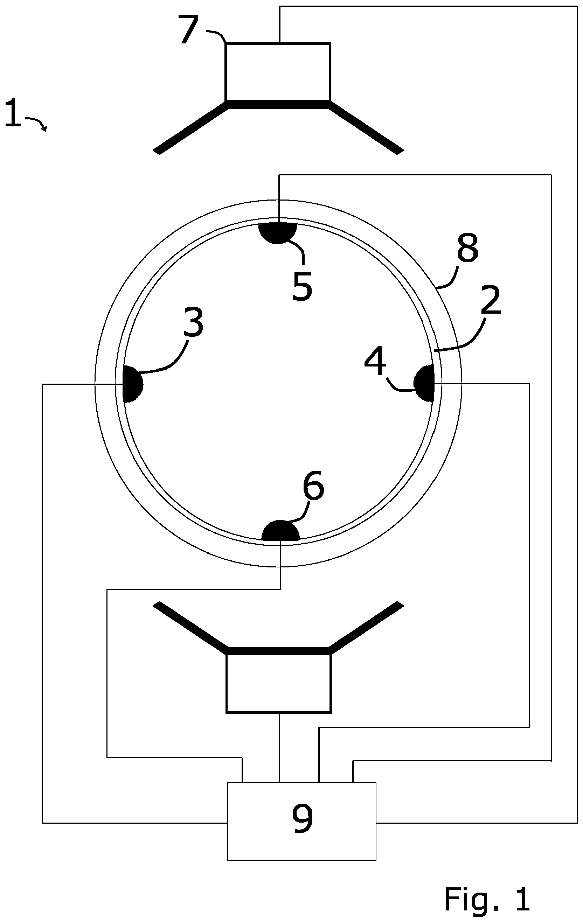

Die Fig. 1 zeigt ein aus dem Stand der Technik bekanntes magnetisch-induktiven Durchflussmessgerätes. Der Aufbau und das Messprinzip eines magnetisch-induktiven Durchflussmessgerätes sind grundsätzlich bekannt. Durch ein Messrohr (1) wird ein Medium geleitet, das eine elektrische Leitfähigkeit aufweist. Eine magnetfelderzeugende Vorrichtung (7) ist so angebracht, dass sich die Magnetfeldlinien senkrecht zu einer durch die Messrohrachse definierten Längsrichtung orientieren. Als magnetfelderzeugende Vorrichtung (7) eignet sich vorzugsweise eine Sattelspule oder ein Polschuh (26) mit aufgesetzter Spule (23) und Spulenkern (24). Bei angelegtem Magnetfeld entsteht im Messrohr (1) eine durchflussabhängige Potentialverteilung, die mit zwei an der Innenwand des Messrohres (1) angebrachten Messelektroden (3, 4) abgegriffen wird. In der Regel sind diese diametral angeordnet und bilden eine Elektrodenachse, die senkrecht zu den Magnetfeldlinien und der Längsachse des Rohres verläuft. Anhand der gemessenen Messspannung kann, unter Berücksichtigung der magnetischen Flussdichte, die Durchflussgeschwindigkeit und, unter Berücksichtigung der Rohrquerschnittsfläche, der Volumendurchfluss des Mediums bestimmt werden. Um das Ableiten der an den Messelektroden (3, 4) anliegenden Messspannung über das Rohr (8) zu verhindern, wird die Innenwand mit einem isolierenden Material beziehungsweise einem Kunststoff-Liner (2) ausgekleidet. Das durch eine magnetfelderzeugende Vorrichtung, beispielsweise einen Elektromagneten, aufgebaute Magnetfeld wird durch einen mittels einer Betriebseinheit getakteten Gleichstrom wechselnder Polarität erzeugt. Dies gewährleistet einen stabilen Nullpunkt und macht die Messung unempfindlich gegenüber Einflüssen durch Mehrphasenstoffe, Inhomogenitäten im Medium oder geringer Leitfähigkeit. Eine Messeinheit liest die an den Messelektroden (3, 4) anliegende Spannung aus und gibt die Durchflussgeschwindigkeit und/oder den mittels einer Auswerteeinheit errechneten Volumendurchfluss des Mediums aus. Handelsübliche magnetisch-induktive Durchflussmessgeräte weisen zusätzlich zu den Messelektroden (3, 4) zwei weitere Elektroden (5, 6) auf. Zum einen dient eine Füllstandsüberwachungselektrode (5), die optimalerweise am höchsten Punkt im Rohr (8) angebracht ist und nur einen minimalen Abstand zur Rohrinnenwandung aufweist, dazu, eine Teilbefüllung des Messrohres (1) zu detektieren, diese Information an den Nutzer weiterzuleiten und/oder den Füllstand bei der Ermittlung des Volumendurchflusses zu berücksichtigen. Desweiteren dient eine Bezugselektrode (6), die üblicherweise diametral zur Füllstandsüberwachungselektrode (5) angebracht ist, dazu eine ausreichende Erdung des Mediums zu gewährleisten.

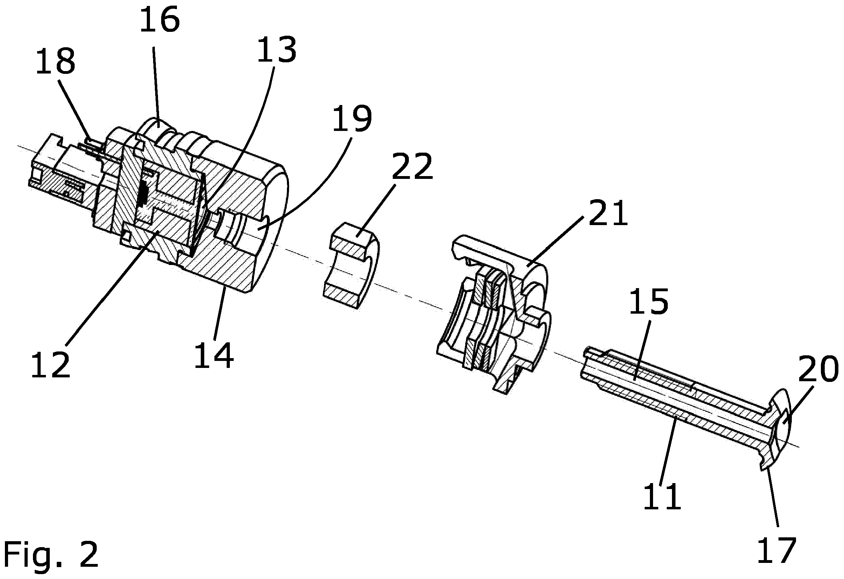

Wie in Fig. 2 dargestellt, ist der Druckmesswandler (12) ein Teil der Elektrodenbaugruppe (10), die zusätzlich zumindest einen Elektrodenkörper (11) umfasst. Der Druckmesswandler (12) ist dabei in einem Gehäuse (16) untergebracht, das leitfähig ist und somit einen elektrischen Kontakt zwischen Elektrodenkörper (11) und einer an den Druckmesswandler (12) endständig angebrachten Kontaktiervorrichtung (18) herstellt. Somit steht die gesamte Elektrodenbaugruppe (10) in einem galvanischen Kontakt mit dem Medium. In einer Weiterbildung bildet ein Hohlraumkörper (14) einen Hohlraum (19) zwischen dem Druckmesswandler (12) und dem Elektrodenkörper (11) bzw. dem Ausgang der ersten Bohrung (15), welche als Wirkdruckkanal ausgebildet ist. Somit wird der auf die Stirnfläche des Elektrodenkörpers (11) wirkende Mediumdruck über den Wirkdruckkanal zur Messmembrane (13) geleitet, wo er detektiert wird. Weiterhin ist das Gehäuse (16) stoffschlüssig mit dem Hohlraumkörper (14) verbunden. Der Elektrodenkörper (11) weist einen Elektrodenkopf (17) auf, wobei der Elektrodenkopf (17) eine Kontur aufweist. Die Kontaktiervorrichtung (18) dient zum Abgreifen des in ein elektrisches bzw. digitales Signal umgewandelten Mediumdruckes mit einer Messund/oder Auswerteeinheit (9). Dabei umfasst die Kontaktiervorrichtung (18) mindestens einen Pin, der in einem elektrischen Kontakt mit dem Gehäuse (16) und somit mit den Elektrodenkörper (11) steht. Der Hohlraumkörper (14) ist dermaßen ausgebildet, dass er zum Einen einen Hohlraum (12) zwischen Messmembrane (13) und Elektrodenkörper (11) formt und zum Anderen den Elektrodenkörper (11) in dem Maße abdichtet, dass das durch den Wirkdruckkanal fließende Medium nicht über die Kontaktfläche austreten kann. Der Elektrodenkörper (11) weist ein Gewinde auf, das dazu dient den Elektrodenkörper (11) an dem Messrohr (1) zu befestigen und den ein Innengewinde aufweisenden Hohlraumkörper (14) anzuschließen.

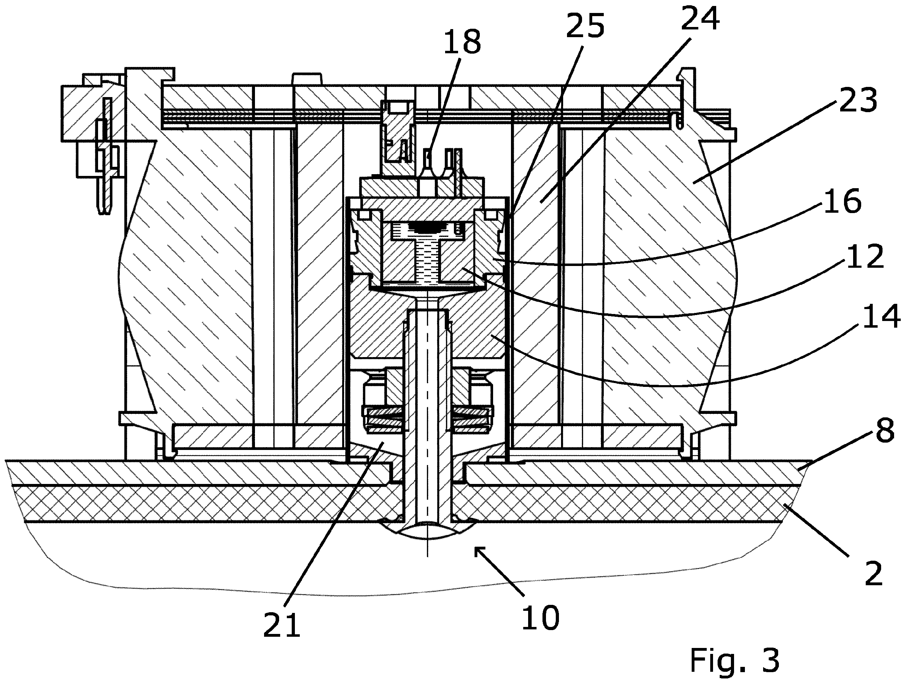

Das in Fig. 3 dargestellte magnetisch-induktive Durchflussmessgerät weist eine Elektrodenbaugruppe (10) auf, die einen stiftförmigen Elektrodenkörper (11) mit einem eine Kontur (20) aufweisenden Elektrodenkopf (17), eine Isolierhülse (21), eine Mutter (22), einen Hohlraumkörper (14) und einen Druckmesswandler (12) umfasst. Der Elektrodenkörper (11) weist ein Gewinde auf, das zum Einen zur Befestigung des Elektrodenkörpers (11) an das Messrohr (1) mit einer Mutter (22) dient und zum Anderen zum Ankoppeln des Hohlraumkörpers (14) und/oder Druckmesswandlers (12) dient. Für das Anbringen der Elektrodenbaugruppe (10) in das Messrohr (1) wird der Elektrodenkörper (11) durch eine in das Rohr (8) und Liner (2) eingearbeitete Öffnung durchgeführt und mit einer Isolierhülse (21) und einer Mutter (22) aussenseitig vom Rohr fixiert. Der Hohraumkörper (14) weist ein Innengewinde auf, dadurch kann der Hohlraumkörper (14) mit dem formschlüssig verbundenen Druckmesswandler (12) auf das Gewinde des Elektrodenkörpers (11) aufgeschraubt werden. Der Hohlraumkörper (14) ist ausgebildet einen dichten Kontakt zum Elektrodenkörper (11) herzustellen, so dass das durch die erste Bohrung (15) fließende Medium nicht an der Kontaktstelle der beiden Bauteile austreten kann. Die Dichtung ist bevorzugt als Kegeldichtung ausgebildet. Die in der Fig. 3 dargestellte Elektrodenbaugruppe (10) ist als Füllstandsüberwachungselektrode (5) ausgebildet und im Innern einer Spule (23), insbesondere im Innern eines Spulenkerns (24), angeordnet. Für diese Weiterbildung ist es notwendig den Spulenkern (24) als Hohlzylinder auszubilden und die Elektrodenbaugruppe (10) elektrisch von der magnetfelderzeugenden Vorrichtung (7), insbesondere der Spule (23) und dem Spulenkern (24) zu isolieren. Die Isolierung (25) kann durch ein Beschichten der Innenseite des Spulenkerns (24) mit einem elektrisch isolierenden Material oder dem Einführen eines elektrisch isolierenden Hohlzylinders zwischen Spulenkern (24) und Elektrodenbaugruppe (10) realisiert sein.

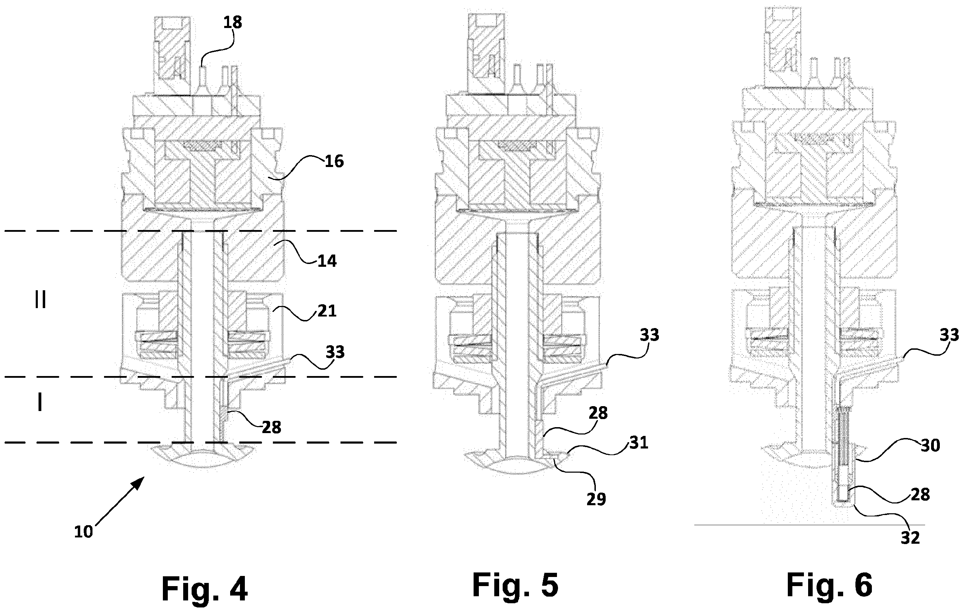

Die Fig. 4 zeigt zusätzlich zu den in Fig. 3 abgebildeten Merkmalen einen Temperatursensor (28). Dieser ist an dem Elektrodenkörper (11) anliegend angebracht.

Die Spitze des Temperatursensors (28) hat zusätzlich Kontakt zur Rückseite des Elektrodenkopfes (17). Desweiteren weist der Elektrodenkörper (11) zwei Bereiche (I, II) mit unterschiedlichen Wandstärken auf. In dem Bereich (I) mit der geringeren Wandstärke befindet sich der Temperatursensor (28). Dieser ist an der Außenwandung des Elektrodenkörpers (11) anliegend angebracht. Desweiteren weist der Elektrodenkörper (11) einen Übergangsbereich auf, in dem die Wandstärke vom ersten Bereich (I) gradiell zunimmt bis sie die Wandstärke des zweiten Bereichs (II) erreicht hat. Dadurch kann eine Beschädigung des elektrischen Anschlusses (33) vermieden werden.

Der in Fig. 5 gezeigte Elektrodenkopf (17) weist an der Rückseite (31) eine Vertiefung (29) auf, in der der Temperatursensor (28) eingesetzt ist. Somit weist der Temperatursensor (28) einer erste Kontaktfläche, die im Kontakt mit der Außenwandung des Elektrodenkörpers (11) steht und eine zweite Kontaktfläche, die im Kontakt mit der Rückseite des Elektrodenkopfes (17) steht, auf. In der Fig. 5 ist der Temperatursensor (28) teilweise in die eingebrachte Vertiefung versenkt.

Die in Fig. 6 abgebildete Elektrodenbaugruppe (10) unterscheidet sich von der in Fig. 5 abgebildeten Elektrodenbaugruppe (10) darin, dass der Elektrodenkopf (17) eine Öffnung oder Lochung, insbesondere eine zweite Bohrung (30) aufweist in die eine Hülse, insbesondere eine Tauchhülse (32) eingesetzt ist, die einen Temperatursensor (28) zum Messen der Mediumstemperatur aufweist.

Die Fig. 4 bis Fig. 6 zeigen alle jeweils eine Isolierhülse (21), die einen Schlitz aufweist, zur Durchführung des elektrischen Anschlusses (33) des Temperatursensors (28).

### Bezugszeichenliste

- 1: Messrohr
- 2: Liner
- 3: erste Messelektrode
- 4: zweite Messelektrode
- 5: Füllstandsüberwachungselektrode
- 6: Bezugselektrode
- 7: magnetfelderzeugende Vorrichtung
- 8: Rohr
- 9: Mess-, Betriebs- und/oder Auswerteeinheit
- 10: Elektrodenbaugruppe
- 11: Elektrodenkörper
- 12: Druckmesswandler
- 13: Messmembrane
- 14: Hohlraumkörper
- 15: erste Bohrung
- 16: Gehäuse
- 17: Elektrodenkopf
- 18: Kontaktiervorrichtung
- 19: Hohlraum
- 20: Kontur
- 21: Isolierhülse
- 22: Mutter
- 23: Spule
- 24: Spulenkern
- 25: Isolierung
- 26: Polschuh
- 27: Leitblech
- 28: Temperatursensor
- 29: Vertiefung
- 30: zweite Bohrung
- 31: Rückseite Elektrodenkopf
- 32: Hülse
- 33: elektrischer Anschluss
- I: erste Bereich
- II: zweite Bereich

## Patentansprüche

1. Magnetisch-induktives Durchflussmessgerät zur Ermittlung der Durchflussgeschwindigkeit und/oder des Volumendurchflusses und des Druckes eines Mediums, umfassend:
- ein Messrohr (1) zum Führen des Mediums;
- eine magnetfelderzeugende Vorrichtung (7); und
- mindestens eine Elektrodenbaugruppe (10), die einen galvanischen Kontakt mit dem Medium formend in das Messrohr (1) eingebaut ist,
wobei die Elektrodenbaugruppe (10) einen Elektrodenkörper (11) aufweist,
wobei der Elektrodenkörper (11) stiftförmig ausgebildet ist und eine Stirnfläche aufweist,
wobei ein Druckmesswandler (12) mit dem Elektrodenkörper (11) gekoppelt ist,
wobei der Druckmesswandler (12) mit dem auf die Stirnfläche wirkenden Druck beaufschlagbar ist,
wobei der Elektrodenkörper (11) eine erste Bohrung (15) aufweist,
wobei die erste Bohrung (15) durchgehend ist und einen integrierten Wirkdruckkanal zum Führen des Mediums bildet,
**dadurch gekennzeichnet,**
**dass** die Elektrodenbaugruppe (10) einen Temperatursensor (28) umfasst, der dazu eingerichtet ist ein von der Mediumstemperatur abhängiges Messsignal zu ermitteln und dass der Temperatursensor (28) am Elektrodenkörper (11) anliegend angebracht ist.

2. Durchflussmessgerät nach Anspruch 1,
wobei der Druckmesswandler (12) eine Messmembrane (13) umfasst.

3. Durchflussmessgerät nach einem der vorhergehenden Ansprüche,
wobei der Elektrodenkörper (11) endseitig mit einem Hohlraumkörper (14) verbunden ist.

4. Durchflussmessgerät nach Anspruch 3,
wobei ein den Druckmesswandler (12) umfassendes Gehäuse (16) stoffschlüssig mit dem Hohlraumkörper (14) verbunden ist.

5. Durchflussmessgerät nach Anspruch 3 oder 4,
wobei eine elektrische Kontaktierung des Elektrodenkörpers (11) über den Hohlraumkörper (14) und/oder das Gehäuse (16) realisiert ist.

6. Durchflussmessgerät nach Anspruch 4 oder 5,
wobei das Gehäuse (16) mindestens eine Kontaktiervorrichtung (18) aufweist, über die die Elektrodenbaugruppe (10) mit einer Mess- und/oder Auswerteeinheit (9) in einem elektrischen Kontakt steht.

7. Durchflussmessgerät nach einem der vorhergehenden Ansprüche,
wobei die magnetfelderzeugende Vorrichtung (7) mindestens eine Spule (23) und mindestens einen im Inneren der Spule (23) positionierten Spulenkern (24) umfasst,
wobei der Spulenkern (23) als Hohlzylinder ausgebildet ist,
wobei die Elektrodenbaugruppe (10) im Inneren des Spulenkerns (24) positioniert ist.

8. Durchflussmessgerät nach Anspruch 7,
wobei der Spulenkern (24) eine Innenseite aufweist,
wobei zwischen der Innenseite und dem Gehäuse (16) eine Isolierung (25) eingebracht ist.

9. Durchflussmessgerät nach einem der vorhergehenden Ansprüche,
wobei der Elektrodenkörper (11) einen Elektrodenkopf (17) aufweist,
wobei der Elektrodenkopf (17) eine Kontur (20) aufweist.

10. Durchflussmessgerät nach einem der vorhergehenden Ansprüche,
wobei der Elektrodenkörper (11) eine Füllstandsüberwachungselektrode (5) und/oder eine Bezugselektrode (6) und/oder eine Messelektrode (3, 4) zum Abgreifen einer Messspannung im Medium umfasst.

11. Durchflussmessgerät nach einem der vorhergehenden Ansprüche,
wobei der Elektrodenkörper (11) als Stiftelektrode, Spitzelektrode oder Pilzelektrode ausgebildet ist.

12. Durchflussmessgerät nach einem der vorhergehenden Ansprüche,
wobei der Elektrodenkörper (11) in einen ersten und zweiten Bereich (I, II) eingeteilt ist,
wobei der Elektrodenkörper (11) im erste Bereich (I) eine geringere Wandstärke aufweist als im zweiten Bereich (II),
wobei der Temperatursensor (28) im ersten Bereich (I) an einer Außenwandung des Elektrodenkörpers (11) angebracht ist.

13. Durchflussmessgerät nach einem der vorhergehenden Ansprüche,
wobei der Temperatursensor (28) einen Halbleiter-Temperatursensor, ein Thermoelement, einen Temperaturfühler mit Schwingquarz, einen pyroelektrischen Temperatursensor, ein Pyrometer oder einen Faseroptischen Temperatursensor umfasst.

14. Durchflussmessgerät nach einem der vorhergehenden Ansprüche,
wobei der Elektrodenkopf (17) eine dem Messrohrinneren abgewandten Rückseite aufweist, in der eine Vertiefung (30) eingebracht ist,
wobei der Temperatursensor (28) in die Vertiefung (30) eingelassen ist.

15. Durchflussmessgerät nach einem der vorhergehenden Ansprüche,
wobei der Elektrodenkopf (17) eine Öffnung, insbesondere eine zweite Bohrung (30) zum Führen einer Hülse (32) aufweist, in der der Temperatursensor (28) eingebracht ist.

## Claims

1. Electromagnetic flowmeter designed to determine the flow velocity and/or volume flow and the pressure of a medium, wherein said flowmeter comprises:
- a measuring tube (1) designed to conduct the medium;
- a unit (7) for generating a magnetic field; and
- at least one electrode assembly (10), which is mounted in the measuring tube (1) to form a galvanic contact with the medium,
wherein the electrode assembly (10) has an electrode body (11),
wherein the electrode body (11) is in the shape of a pin and has a front surface,
wherein a pressure transducer (12) is coupled with the electrode body (11),
wherein the pressure transducer (12) can be exposed to the pressure acting on the front surface,
wherein the electrode body (11) has a first bore (15),
wherein the first bore (15) is a through-bore and forms an integrated active pressure channel to conduct the medium,
**characterized in that**
the electrode assembly (10) has a temperature sensor (28), wherein said sensor is designed to determine a measuring signal that depends on the temperature of the medium and
**in that** the temperature sensor (28) is fit on the electrode body (11).

2. Flowmeter as claimed in Claim 1,
wherein the pressure transducer (12) comprises a measuring membrane (13).

3. Flowmeter as claimed in one of the previous claims,
wherein the electrode body (11) is connected to a hollow body (14) at one end.

4. Flowmeter as claimed in Claim 3,
wherein a housing (16) comprising the pressure transducer (12) is connected to the hollow body (14) via a substance to substance connection.

5. Flowmeter as claimed in Claim 3 or 4,
wherein the electrode body (11) is contacted electrically via the hollow body (14) and/or the housing (16).

6. Flowmeter as claimed in Claim 4 or 5,
wherein the housing (16) has at least a contact unit (18) by means of which the electrode assembly (10) is contacted electrically with a measuring and/or evaluation unit (9).

7. Flowmeter as claimed in one of the previous claims,
wherein the unit (7) for generating a magnetic field has at least a coil (23) and at least a coil core (24) positioned inside the coil (23),
wherein the coil core (23) is designed as a hollow cylinder,
wherein the electrode assembly (10) is positioned inside the coil core (24).

8. Flowmeter as claimed in Claim 7,
wherein the coil core (24) has an interior,
wherein an insulation (25) is located between the interior and the housing (16).

9. Flowmeter as claimed in one of the previous claims,
wherein the electrode body (11) has an electrode head (17), wherein the electrode head (17) has a contour (20).

10. Flowmeter as claimed in one of the previous claims,
wherein the electrode body (11) has a level monitoring electrode (5) and/or a reference electrode (6) and/or a measuring electrode (3, 4) to measure a measuring voltage in the medium.

11. Flowmeter as claimed in one of the previous claims,
wherein the electrode body (11) is formed as a pin electrode, pointed electrode or a mushroom-shaped electrode.

12. Flowmeter as claimed in one of the previous claims,
wherein the electrode body (11) is divided into a first and second zone (I, II),
wherein in the first zone (I) the electrode body (11) has a lower wall thickness than in the second zone (II),
wherein the temperature sensor (28) is mounted in the first zone (I) on an outer wall of the electrode body (11).

13. Flowmeter as claimed in one of the previous claims,
wherein the temperature sensor (28) has a semi-conductor temperature sensor, a thermocouple, a temperature sensor with a quartz oscillator, a pyroelectric temperature sensor, a pyrometer or a fiber-optic temperature sensor.

14. Flowmeter as claimed in one of the previous claims,
wherein the electrode head (17) has a rear side facing away from the interior of the measuring tube, wherein a recess (30) is provided in said rear side, wherein the temperature sensor (28) is embedded into the recess (30).

15. Flowmeter as claimed in one of the previous claims,
wherein the electrode head (17) has an opening, particularly a second bore (30) for guiding a sleeve (32), in which the temperature sensor (28) is inserted.

## Revendications

1. Débitmètre électromagnétique destiné à la détermination de la vitesse d'écoulement et/ou du débit volumique et de la pression d'un produit, lequel débitmètre comprend :
- un tube de mesure (1) destiné à guider le produit ;
- un dispositif de génération de champ magnétique (7) ; et
- au moins un module d'électrode (10), lequel module est monté dans le tube de mesure (1) en formant un contact galvanique avec le produit,
le module d'électrode (10) présentant un corps d'électrode (11),
le corps d'électrode (11) étant réalisé en forme de broche et présentant une surface frontale,
un capteur de pression (12) étant couplé au corps d'électrode (11),
le capteur de pression (12) pouvant être sollicité par la pression agissant sur la surface frontale,
le corps d'électrode (11) présentant un premier perçage (15),
le premier perçage (15) étant traversant et formant un canal de pression active intégré pour le guidage du produit,
**caractérisé**
**en ce que** le module d'électrode (10) comprend un capteur de température (28), lequel capteur est conçu pour déterminer un signal de mesure dépendant de la température du produit et
**en ce que** le capteur de température (28) est placé en appui sur le corps d'électrode (11).

2. Débitmètre selon la revendication 1,
pour lequel le capteur de pression (12) comprend une membrane de mesure (13).

3. Débitmètre selon l'une des revendications précédentes,
pour lequel le corps d'électrode (11) est relié à un corps creux (14) à une extrémité.

4. Débitmètre selon la revendication 3,
pour lequel un boîtier (16) comprenant le capteur de pression (12) est relié au corps creux (14) par une liaison de matière.

5. Débitmètre selon la revendication 3 ou 4,
pour lequel une mise en contact électrique du corps d'électrode (11) est réalisée par l'intermédiaire du corps creux (14) et/ou du boîtier (16).

6. Débitmètre selon la revendication 4 ou 5,
pour lequel le boîtier (16) présente au moins un dispositif de contact (18), par l'intermédiaire duquel le module d'électrode (10) est en contact électrique avec une unité de mesure et/ou d'exploitation (9).

7. Débitmètre selon l'une des revendications précédentes,
pour lequel le dispositif générateur de champ magnétique (7) comprend au moins une bobine (23) et au moins un noyau de bobine (24) positionné à l'intérieur de la bobine (23),
le noyau de bobine (23) étant conçu en tant que cylindre creux,
le module d'électrode (10) étant positionné à l'intérieur du noyau de bobine (24).

8. Débitmètre selon la revendication 7,
pour lequel le noyau de bobine (24) présente une face intérieure,
une isolation (25) étant placée entre la face intérieure et le boîtier (16).

9. Débitmètre selon l'une des revendications précédentes,
pour lequel le corps d'électrode (11) comprend une tête d'électrode (17), la tête d'électrode (17) présentant un contour (20).

10. Débitmètre selon l'une des revendications précédentes,
pour lequel le corps d'électrode (11) comprend une électrode de surveillance de niveau (5) et/ou une électrode de référence (6) et/ou une électrode de mesure (3, 4) pour prélever une tension de mesure dans le produit.

11. Débitmètre selon l'une des revendications précédentes,
pour lequel le corps d'électrode (11) est réalisé sous forme d'électrode à broche, d'électrode à pointe ou d'électrode champignon.

12. Débitmètre selon l'une des revendications précédentes,
pour lequel le corps d'électrode (11) est divisé en une première et une deuxième zone (I, II),
le corps d'électrode (11) présentant dans la première zone (I) une épaisseur de paroi plus faible que dans la deuxième zone (II),
le capteur de température (28) étant monté dans la première zone (I) sur une paroi extérieure du corps d'électrode (11).

13. Débitmètre selon l'une des revendications précédentes,
pour lequel le capteur de température (28) comprend un capteur de température à semi-conducteur, un thermocouple, un capteur de température à quartz oscillant, un capteur de température pyroélectrique, un pyromètre ou un capteur de température à fibre optique.

14. Débitmètre selon l'une des revendications précédentes,
pour lequel la tête d'électrode (17) présente une face arrière opposée à l'intérieur du tube de mesure, face dans laquelle est réalisé un renfoncement (30), le capteur de température (28) étant encastré dans le renfoncement (30).

15. Débitmètre selon l'une des revendications précédentes,
pour lequel la tête d'électrode (17) présente une ouverture, notamment un deuxième perçage (30) pour le guidage d'une douille (32) dans laquelle est inséré le capteur de température (28).
